# EUROPÄISCHE PATENTSCHRIFT

(11) **EP 2 707 416 B1**
(45) Veröffentlichungstag und Bekanntmachung des Hinweises auf die Patenterteilung: **20.05.2015**
(21) Anmeldenummer: 12733504.0
(22) Anmeldetag: 11.07.2012
(51) Int. Cl.: C08G 75/23, A61J 9/00

(54) **THERMOPLASTISCHE FORMMASSE**
THERMOPLASTIC MOULDING COMPOSITION
MATIÈRE DE MOULAGE THERMOPLASTIQUE

(30) Priorität: 14.07.2011 EP 11173983
(43) Veröffentlichungstag der Anmeldung: 19.03.2014
(73) Patentinhaber: BASF SE, 67056 Ludwigshafen (DE)
(72) Erfinder: METTLACH, Claudia, 54295 Trier (DE); WEBER, Martin, 67487 Maikammer (DE); MALETZKO, Christian, 67122 Altrip (DE); TROTTE, Bernd, 69502 Hemsbach (DE)
(86) Internationale Anmeldenummer: PCT/EP2012/063528
(87) Internationale Veröffentlichungsnummer: WO 2013/007735

(56) Entgegenhaltungen:
- WO-A1-03/089520
- GB-A- 1 078 234
- US-A- 5 326 834
- US-A1- 2006 286 329

## Beschreibung

Die vorliegende Erfindung betrifft die Verwendung einer Formmasse zur Herstellung eines Fütterbehältnisses im Wesentlichen bestehend aus einem Copolymer bestehend aus
(A) von 5 bis 60 Gew.-% Einheiten der Formel (I) 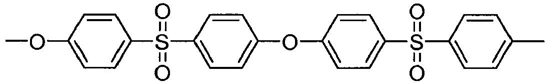 und
(B) von 40 bis 95 Gew.-% Einheiten der Formel (II) 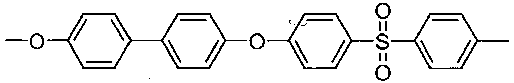
wobei die Summe der Gewichtsanteile 100 Gew.-% bezogen auf das Copolymer ergibt und wobei die Formmassen eine Entformungskraft von 1800 bis 2800 N aufweisen.

Die Bereitstellung von Formmassen, die hohen mechanischen Anforderungen entsprechen und zeitgleich keine Substanzen an den in dem Fütterbehältnisses befindlichen Inhalt abgeben, ist von zunehmender Bedeutung.

So wurde bereits in der WO 03/089520 A1 die Verwendung von Polyarylethersulfonen insbesondere Polyethersulfonen und Polyphenylsulfonen sowie mischbaren Formmassen daraus zur Herstellung von medizinischen Formteilen unter anderem auch Babyflaschen beschrieben.

Aus der JP 2003 73303 sind verzweigte Polybiphenylethersulfone bekannt, die sich gemäß dieser Offenbarung unter anderem eignen, um Fütterflaschen herzustellen.

Aus der GB 2 088 396 sind Copolymere mit PESU und PPSU Einheiten bekannt. Auch aus der WO 2005/0954 91 sind Copolymere mit PESU und PPSU Einheiten bekannt.

Ziel der vorliegenden Erfindung war es, Polyethersulfon enthaltende Formmassen zur Verfügung zu stellen, die bei der Herstellung von Fütterflaschen den hohen Verarbeitungsanforderungen genügen sollten. Insbesondere sollte sich die Formmasse für die Herstellung von Fütterflaschen in verschiedenen Spritzstreckblasverfahren und/oder Spritzblasverfahren eignen. Insbesondere sollte sich die Formmasse für die Herstellung von Fütterbehältnissen in einem Spritzblasverfahren eignen.

Um dem Spritzblasverfahren zu genügen, sollte die Formmasse eine möglichst hohe Viskosität aufweisen, sodass die Fütterflasche eine gleichmäßig ausgebildete Flaschenwand aufweist. Um Defekte an der Fütterflasche zu vermeiden sollte die Formmasse ein einfaches Herauslösen der Formmasse aus der Produktionsapparatur gewährleisteten.

Gleichzeitig sollte eine Formmasse entwickelt werden, die hohen mechanischen Anforderungen genügt. So sollte gewährleistet werden, dass wenn Fütterbehältnisse aus der Formmasse hergestellt werden, diese möglichst stoß- und fallstabil sind.

Aufgabe war somit, eine Formmasse zu entwickeln, die eine niedrige Entformungskraft aufweist. Zugleich sollte die Formmasse eine vorteilhafte Viskosität in der Schmelze zeigen. Gleichzeitig sollte die Formmasse allerdings auch hohen mechanischen Anforderungen wie Kerbschlagzähigkeit genügen. Insbesondere zur Anwendung im Bereich der Fütterflaschen sollten die Formmassen zudem transparent sein.

Überraschend konnte demgemäß eine Formmasse gefunden werden, die im Wesentlichen aus einem Copolymer besteht, wobei das Copolymer aus
(A) von 5 bis 60 Gew.-% Einheiten der Formel (I) 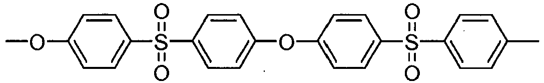 und
(B) von 40 bis 95 Gew.-% Einheiten der Formel (II) 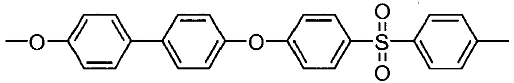
wobei die Summe der Gewichtsanteile der Einheiten A und B 100 Gew.-% bezogen auf das Copolymer ergibt, besteht und wobei die Formmasse eine Entformungskraft von 1800 bis 2800 N aufweist.

Unter dem Copolymer ist selbstverständlich auch eine Mischung von Copolymeren aus den Einheiten A und B zu verstehen, die unterschiedliche Endgruppen aufweisen.

Die Einheiten nach Formel (I) werden im Rahmen der Erfindung auch PESU-Einheiten genannt. Die Einheiten nach Formel (II) werden im Rahmen der Erfindung auch PPSU-Einheiten genannt. Die Abkürzungen wie PPSU und PESU entsprechen im Rahmen der vorliegenden Erfindung der ISO 1043-1:2001.

In einer bevorzugten Ausführungsform umfasst die Formmasse ein Copolymer bestehend aus von 5 bis 50 Gew.-% der Einheiten (A) nach Formel I, besonders bevorzugt von 5 bis 40 Gew.-%, zum Beispiel von 8 bis 40 Gew.-% insbesondere von 8 bis 35 Gew.-% zum Beispiel von 9 bis 31 Gew.-% der Einheiten (A) nach Formel I, wobei die Summe der Gewichtsanteile der Einheiten A und B 100 Gew.-% bezogen auf das Copolymer ergibt.

In einer bevorzugten Ausführungsform umfassen die Formmassen Copolymere bestehend aus von 95 bis 50 Gew.-% der Einheiten (B) nach Formel II, besonders bevorzugt von 95 bis 60 Gew.-%, zum Beispiel von 92 bis 60 Gew.-% insbesondere von 92 bis 65 Gew.-% zum Beispiel von 81 bis 69 Gew.-% der Einheiten (B) nach Formel II wobei die Summe der Gewichtsanteile der Einheiten A und B 100 Gew.-% bezogen auf das Copolymer ergibt.

Herstellungsverfahren, die zu dem vorgenannten Copolymer führen, sind dem Fachmann an sich bekannt. Ein Herstellungsverfahren ist beispielsweise in GB 1 078 234 beschrieben.

Ein bevorzugtes Herstellungsverfahren wird in Herman F. Mark, "Encyclopedia of Polymer Science and Technology", third edition, Volume 4, 2003 auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Ganz besonders bevorzugt wird zur Herstellung des eingesetzten Copolymers mindestens eine aromatische Verbindung mit zwei Halogensubstituenten wie Dichlordiphenylsulfon und mindestens zwei unterschiedliche aromatische Verbindungen mit zwei funktionellen Gruppen, die gegenüber vorgenannten Halogensubstituenten reaktiv sind wie Dihydroxybiphenol und Dihydroxydiphenylsulfon, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist, umgesetzt. Eine besonders geeignete Kombination ist N-Methylpyrrolidon als Lösungsmittel und Kaliumcarbonat als Base.

Das Copolymer der vorliegenden Erfindung weist vorzugsweise gewichtsmittlere Molekulargewichte M_{w} von 40.000 bis 90.000 g/mol auf.

Die erfindungsgemäße Formmasse hat eine Entformungskraft von 1800 bis 2800 N, vorzugsweise von 1900 bis 2700 N. Die Entformungskraft resultiert vorwiegend aus der speziellen Zusammensetzung, kann jedoch durch das spezielle angewandte Verfahren beeinflusst werden.

Des Weiteren kann die Formmasse eine Schmelze-Volumenfließrate von 40 bis 70 cm³/10 min bevorzugt von 45 bis 60 cm³/10 min gemessen bei 360°C/5 kg nach EN ISO 1133:2005 haben.

Die Viskositätszahl der Formmasse gemessen nach ISO 1628-2:1998 kann von 45 bis 65 ml/g insbesondere von 48 bis 62 ml/g liegen.

Probenkörper, die aus der Formmasse hergestellt werden, können einen Haze-Wert von 2,0 bis 4,5, insbesondere von 2,0 bis 4,0 gemessen nach DIN 53236 aufweisen.

Des Weiteren ist ein Probenkörper aus der erfindungsgemäßen Formmasse vorzugsweise transparent. Der Probenkörper kann bevorzugt eine Transparenz von 70% bis 99%, insbesondere von 75% bis 90% gemessen nach DIN 53236 aufweisen.

Die erfindungsgemäße Formmasse zeichnet sich darüber hinaus durch ihre günstige scheinbare Viskosität aus. In Tabelle 3 wird dies exemplarisch anhand von drei erfindungsgemäßen Formmassen gezeigt.

Fütterbehältnisse können mittels verschiedener Spritzstreckblas- und/oder-Spritzblas-Verfahren hergestellt werden.

Stellt man Fütterbehältnisse aus der erfindungsgemäßen Formmasse mittels des Spritzblasverfahrens her, wird in der Regel zunächst durch Spritzgießen eine zylindrische Preform mit dem späteren Mündungs- und Dichtbereich aus der erfindungsgemäßen Formmasse hergestellt, die über der Erweichungstemperatur/Glasübergangstemperatur entformt wird. Die Preform verbleibt auf dem Dorn (Formkern), wird in das Blasformwerkzeug überführt und mittels Druckluft vom Dorn (Formkern) in das formgebende Blasformwerkzeug gedrückt. Zur Umformung kann die Wärme aus dem Spritzgussprozess genutzt werden, das heißt, die Preform muss nicht aufgeheizt werden.

Die erfindungsgemäße Formmasse weist eine so vorteilhafte MVR und VZ sowie Scherviskosität auf, dass die so hergestellten Fütterbehältnisse mit einem besonders geringen Ausschuss hergestellt werden. Dazu trägt insbesondere auch die niedrige Entformungskraft bei, die ein besonders schadfreies Herauslösen der Fütterbehältnisse aus der Produktionsapparatur gewährleistet. Insbesondere lassen die sich aus der erfindungsgemäßen Formmasse hergestellten Fütterbehältnisse einfach von dem Dorn (Formkern) lösen, damit das Fütterbehältnis schadfrei mittels Druckluft vom Dorn (Formkern) gedrückt werden kann.

Die erfindungsgemäße Formmasse kann auch im Spritzstreckblas-Verfahren zu Fütterbehältnissen verarbeitet werden. Das Verfahren eignet sich beispielsweise zur Herstellung von dünnwandigen, hoch-transparenten Flaschen.

Beim Spritzstreckblas-Verfahren wird aus der Formmasse eine Preform hergestellt, die aufgeheizt wird. In der darauf folgenden Blasstation werden die Preformen mittels Reckdorn in Längsrichtung gestreckt. Gleichzeitig wird die Preform mit einem geringen Vorblasdruck in Umfangsrichtung gestreckt. Schließlich wird die Form fertig ausgeblasen werden.

Fütterbehältnisse, die aus der erfindungsgemäßen Formmasse hergestellt werden sind bevorzugt offene oder verschlossene Behältnisse beispielsweise Gefäße. Ein Behältnis ist ein Gegenstand, der in seinem Inneren einen Hohlraum aufweist, der insbesondere dem Zweck dient, seinen Inhalt von seiner Umwelt zu trennen. Ein Gefäß ist ein Gerät mit einer steifen und starren Hülle, die einen Inhalt unterschiedlicher Konsistenz fassen kann (DIN 28005).

Die Fütterbehältnisse können Flaschenform haben und letztere werden im Rahmen der Schrift Fütterflasche genannt. Als Fütterflasche sind Behältnisse und/oder Gefäße zu verstehen, die im Verhältnis zu ihrer Höhe einen relativ geringen Durchmesser und/oder einen flachen Boden haben. Das sich konisch verjüngende Ende einer Flasche, endet in einer runden Öffnung. Die Runde Öffnung kann mittels eines Deckels verschlossen werden.

Die Fütterflasche kann eine Weithals- oder Enghalsflasche sein. Unter einer Enghalsflasche ist eine Fütterflasche zu verstehen, bei der der Durchmesser der Öffnung deutlich geringer ist als der durchschnittliche Innendurchmesser des Aufbewahrungsraumes.

Weist die Fütterflasche einen Verschluss auf, hat sie beispielsweise einen Kappenverschluss, einen Gewindeverschluss, ein Klick-Verschlusssystem, einen Steckverschluss bevorzugt einen Gewindeverschluss oder ein Klick-Verschlusssystem.

In einer besonderen Ausführungsform hat die Fütterflasche eine aufgesteckte, schnullerähnliche Saugvorrichtung, die der Zuführung von flüssiger Nahrung für Tiere oder Menschen, insbesondere Säuglinge dient.

Gängige Fütterflaschengrößen im Humanbereich sind 125 ml, 240 ml und 330 ml. Die Fütterflasche kann allerdings auch andere Größen aufweisen.

### Beispiele

### Normen

- SN EN ISO 1043-1:2001: Kunststoffe - Kennbuchstaben und Kurzbezeichnungen - Teil 1: Basis-Polymere und ihre besonderen Eigenschaften (ISO 1043-1:2001).
- ISO 1628-2:1998: Kunststoffe - Bestimmung der Viskosität von Polymeren in verdünnter Lösung unter Verwendung von Kapillarviskosimetern; Deutsche Fassung EN ISO 1628-2:1998.
- ISO 1133:2005: Kunststoffe - Bestimmung der Schmelze-Massefließrate (MFR) und der Schmelze-Volumenfließrate (MVR) von Thermoplasten; Deutsche Fassung EN ISO 1133:2005.
- ISO 527-2:1993 einschließlich Corr. 1:1994: Kunststoffe - Bestimmung der Zugeigenschaften-Teil 2: Prüfbedingungen für Form- und Extrusionsmassen; Deutsche Fassung EN ISO 527-2:1996.
- ISO 179-2:1997: Kunststoffe - Bestimmung der Charpy-Schlageigenschaften - Teil 2: Instrumentierte Schlagzähigkeitsprüfung; Deutsche Fassung EN ISO 179:1999.
- DIN 53236: Prüfung von Farbmitteln; Meß- und Auswertebedingungen zur Bestimmung von Farbunterschieden bei Anstrichen, ähnlichen Beschichtungen und Kunststoffen.
- DIN 28005: Allgemeintoleranzen für Behälter.

### Analysemethoden

- Viskositätszahl (VZ) gemessen nach ISO 1628 in 1%iger NMP Lösung.
- Schmelze-Volumenfließrate (MVR) gemessen nach ISO 1133 bei 365 °C / 5 kg.
- E-Modul und Bruchdehnung gemessen nach ISO 527-2.
- Kerbschlagzähigkeit gemessen nach ISO 179/1eA.
- Transparenz, Color Factor, Haze, Yl gemessen nach DIN 53236.
- Scheinbare Viskosität: Mit einem Göttfert Kapillar Viskosimeter (Rheograph 2003) wurde die scheinbare Scherrate bestimmt. Die Messgeometrie war wie folgt: Kreiskapillare Länge= 30mm, Radius= 0,5mm, L/R= 60. Die Messtemperatur lag bei 370°C, der Scherratenbereich bei 57-11000/s. Es wurde eine Vorheizzeit von 5 min gewählt. Die Proben wurden für mehr als 5 Tage bei 125°C vorbereitet. Bei den Untersuchungen mit dem Rheograph 2003 wurde eine Kunststoffschmelze mittels Kolben durch eine Kapillare mit Vollkreisquerschnitt definierter Abmessung gepreßt, wobei der Volumendurchsatz vorgegeben und der Extrusiondruck gemessen wurde. Aus dem Volumendurchsatz wurde die scheinbare Scherrate bestimmt und aus dem Druck die Wandschubspannung. Aus diesen beiden Werten wurde die scheinbare Viskosität errechnet. (Die Berechnung kann nach M. Pahl, W. Gleißle, H.M. Laun: Praktische Rheologie der Kunststoffe und Elastomere, VDI Verlag, Düsseldorf, 1991, S. 161 ff. erfolgen).
- Entformungskraft wurde wie folgt gemessen: Die Messung der Entformungskraft erfolgt an einem zylindrischen Formteil (Die Entformungshülse hat folgende Maße: Außendurchmesser: 86 mm, Höhe: 60 mm, Wanddicke:1,5 - 2,5 mm.)

Das Werkzeug hatte drei piezokeramische Kraftaufnehmer, mit denen die Kraft gemessen wird, die benötigt wird, um das Formteil, von dem Kern ohne Entformungsschräge zu drücken. Die Spritzgießmaschine hatte eine Schließkraft von 1000 kN und einen Schneckendurchmesser von 30 mm. Gemessen wurden die Kräfte der drei Kraftaufnehmer über dem Entformungsweg, den der Auswerfer zurücklegt. Dabei wurden als Kennwerte die Maximalkraft und die Entformungsarbeit festgehalten, die notwendig sind, um das Formteil vom Kern zu schieben. Die Auswerfergeschwindigkeit betrug dabei 15 mm/s, die Massetemperatur betrug 360 °C und die Werkzeugtemperatur 100 °C. Die Messungen wurden jeweils zehnmal wiederholt. Die in der Tabelle angegebenen Werte sind die Mittelwerte der Maximalkraft aus den zehn Messungen.

### Einsatzstoffe:

Dichlordiphenylsulfon (DCDPS)
Dihydroxybiphenol (DHBP)
Dihydroxydiphenylsulfon (DHDPS)
Pottasche (K₂CO₃, gemahlen)
N-Methyl-2-pyrrolidon (NMP)

PPSU für Vergleichsversuche: Mw=69.000 g/mol; Mn=25.000 g/mol, Messung mittels Gelpermeationschromatographie mit Dimethylacetamid als Laufmittel und PMMA-Standards.

PESU für Vergleichversuche: Mw=55.000 g/mol; Mn=21.000 g/mol, Messung mittels Gelpermeationschromatographie mit Dimethylacetamid als Laufmittel und PMMA-Standards.

### Herstellung der Copolymere:

Dichlordiphenylsulfon (DCDPS), Dihydroxybiphenol (DHBP) und Dihydroxydiphenylsulfon (DHDPS) wurden in K₂CO₃ und NMP (Start) gelöst (Mengenangaben siehe nachfolgende Tabelle). Nach dem Erreichen von 190°C wurde die Lösung 4 h unter Stickstoffatmosphäre gerührt. Das restliche NMP (Ende) wurde zugegeben und bei einer Temperatur zwischen 120°C und 150°C 1 h mit 15 l/h Methylchlorid begast. Die Suspension wurde abgekühlt und bei einer Temperatur kleiner 80°C abgelassen, filtriert, zertropft, mit kochendem Wasser gewaschen und getrocknet.

**Tabelle 1: Mengenangaben zur Herstellung der Copolymere**

| | Copo 1 | Copo 2 | Copo 3 |
|---|---|---|---|
| | 20% PESU | 30% PESU | 40%PESU |
| DCDPS [g] | 574,16 | 574,16 | 574,16 |
| DHBP [g] | 303,89 | 265,26 | 226,25 |
| DHDPS [g] | 102,07 | 152,73 | 202,64 |
| K2CO3 [g] | 290,24 | 290,24 | 290,24 |
| NMP (Start) [ml] | 1538 | 1538 | 1538 |
| NMP (Ende) [ml] | 1462 | 1462 | 1462 |

**Tabelle 2: Eigenschaften der Copolymere**

| Formmasse Nr. | 1 | 2 | 3 | V4 | V5 | V6 | V7 |
|---|---|---|---|---|---|---|---|
| Zusammensetzung | Copo 1 20% PESU-Einheiten | Copo 2 30% PESU-Einheiten | Copo 3 40% PESU-Einheiten | Blend aus PPSU/PESU (80/20) | PPSU | PESU | Copo nach US 5,326,834 40% PESU-Einheiten |
| | | | | | | | |
| VZ [ml/g] | 54,6 | 51,5 | 51,6 | 59,9 | 71,0 *) | 56,4- | 53,5 |
| MVR [cm³/10 min] | 50,0 | 66,6 | 59,7 | 13,7 | 11,8 | 43 | 49,6 |
| Erscheinungsbild | transparent | transparent | transparent | opak | transparent | transparent | transparent |
| Transparenz [%] | 81,5 | 82,2 | 79,5 | n.m. | 76,0 | 85,3 | 78,6 |
| Haze [%] | 3,7 | 3,0 | 2,5 | n.m (da opak) | 3,4 | 2,9 | 4,7 |
| Entformungskraft [N] | 2037 | 2258 | 2631 | 2970 | 2870 | 4705 | 2940 |
| Bruchdehnung εBr [%] | 70,7 | 71,0 | 68,4 | 30,4 | 17,8 | 42,1 | 62,3 |
| aK [kJ/m²] | 73,1 | 16,5 | 14,8- | 17,1 | >70 | 6,7 | 12,1 |
| aK [kJ/m²] 200 °C / 250 h | 8,6 | 6,7 | 5,9 | 5,2 | 9,8 | 4,2 | 5,8 |
| E-Modulus [MPa] | 2309,0 | 2369,0 | 2412 | 2359,0 | 2299,0 | 2710 | 2420 |

| | | | | | | | |
|---|---|---|---|---|---|---|---|
| *) gemessen in Lösung 0.01 g/ml phenol/1,2-dichlorbenzol (1/1) n.m.: nicht messbar | | | | | | | |

**Tabelle 3: Scheinbare Viskosität**

| Scheinbare Scherrate [1/s] | scheinbare Viskosität [Pa*s] | | | | Scheinbare Scherrate [1/s] | scheinbare Viskosität [Pa*s] |
|---|---|---|---|---|---|---|
| | Copo 1 | Copo 2 | Copo 3 | PPSU | | PESU |
| | 20% PESU-Einheiten | 30% PESU-Einheiten | 40% PESU-Einheiten | | | |
| 57,6 | 474,941 | 349,957 | 437,446 | 3012,13 | 45,6 | 549,213 |
| 115,2 | 424,947 | 331,209 | 412,449 | 2293,46 | 88,7 | 532,642 |
| 230,4 | 424,947 | 324,96 | | 1796,65 | 172,6 | 503,296 |
| 576 | 393,701 | 307,462 | 358,705 | 1196,1 | 335,9 | 455,072 |
| 576 | 389,952 | 306,212 | 357,456 | 1213,6 | 653,4 | 384,763 |
| 1152 | 342,457 | 274,966 | 311,211 | 839,896 | 1271,3 | 297,970 |
| 2304 | 259,968 | 218,098 | 236,846 | 539,933 | 2473,3 | 209,908 |
| 5760 | 147,857 | 129,859 | 136,233 | n.m. | 4811,8 | 136,083 |
| 11520 | 91,7386 | 81,1149 | 84,4895 | n.m. | 9361,5 | 83,033 |
| | | | | | 18213,0 | 48,751 |

| | | | | | | |
|---|---|---|---|---|---|---|
| n.m.: nicht messbar | | | | | | |

## Patentansprüche

1. Verwendung einer Formmasse zur Herstellung eines Fütterbehältnisses im Wesentlichen bestehend aus einem Copolymer, bestehend aus
(A) von 5 bis 60 Gew.-% Einheiten der Formel (I) 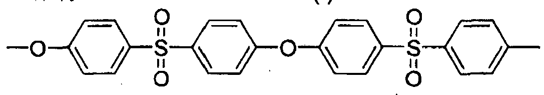 und
(B) von 40 bis 95 Gew.-% Einheiten der Formel (II) 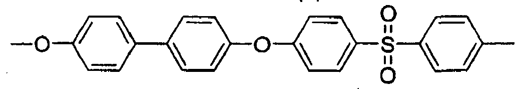
wobei die Summe der Gewichtsanteile der Einheiten A und B 100 Gew.-% bezogen auf das Copolymer ergibt, und wobei das Copolymer eine Entformungskraft von 1800 bis 2800 N aufweist, wobei das Fütterbehältnis eine Fütterflasche ist.

2. Verwendung einer Formmasse zur Herstellung eines Fütterbehältnisses nach Anspruch 1 wobei das Copolymer aus
(A) von 5 bis 50 Gew.-% Einheiten der Formel (I) und
(B) von 50 bis 95 Gew.-% Einheiten der Formel (II) besteht,
wobei die Summe der Gewichtsanteile der Einheiten A und B 100 Gew.-% bezogen auf das Copolymer ergibt.

3. Verwendung einer Formmasse zur Herstellung eines Fütterbehältnisses nach Anspruch 1 oder 2 wobei das Copolymer aus
(A) von 8 bis 35 Gew.-% Einheiten der Formel (I) und
(B) von 65 bis 92 Gew.-% Einheiten der Formel (II) besteht,
wobei die Summe der Gewichtsanteile der Einheiten A und B 100 Gew.-% bezogen auf das Copolymer ergibt.

4. Verwendung einer Formmasse zur Herstellung eines Fütterbehältnisses nach mindestens einem der Ansprüche 1 bis 3 wobei die Formmasse eine Viskosität (MVR) gemessen nach EN ISO 1133:2005 von 40 bis 70 cm³ / 10 min gemessen bei 365°C/5 kg aufweist.

5. Verwendung einer Formmasse zur Herstellung eines Fütterbehältnisses nach mindestens einem der Ansprüche 1 bis 4 wobei ein Probenkörper aus der Formmasse einen Haze-Wert von 2,0 bis 4,5, gemessen nach DIN 53236, aufweist.

6. Verwendung einer Formmasse zur Herstellung eines Fütterbehältnisses nach mindestens einem der Ansprüche 1 bis 5 wobei ein Probenkörper aus der Formmasse eine Transparenz von 70% bis 99%, gemessen nach DIN 53236, aufweist.

7. Fütterflasche aus einer Formmasse gemäß einem der Ansprüche 1 bis 6.

## Claims

1. The use of a molding composition for producing a feed container consisting essentially of a copolymer composed of
(A) from 5 to 60% by weight of units of the formula (I) 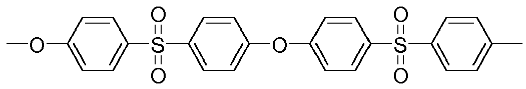 and
(B) from 40 to 95% by weight of units of the formula (II) 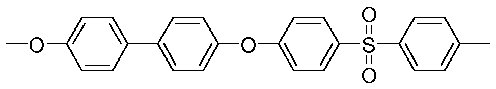
where the total of the proportions by weight of the units A and B is 100% by weight, based on the copolymer, and where the demolding force of the copolymer is from 1800 to 2800 N, where the feed container is a feed bottle.

2. The use of a molding composition for producing a feed container according to claim 1 where the copolymer is composed of
(A) from 5 to 50% by weight of units of the formula (I) and
(B) from 50 to 95% by weight of units of the formula (II),
where the total of the proportions by weight of the units A and B is 100% by weight, based on the copolymer.

3. The use of a molding composition for producing a feed container according to claim 1 or 2 where the copolymer is composed of
(A) from 8 to 35% by weight of units of the formula (I) and
(B) from 65 to 92% by weight of units of the formula (II),
where the total of the proportions by weight of the units A and B is 100% by weight, based on the copolymer.

4. The use of a molding composition for producing a feed container according to at least one of claims 1 to 3 where the viscosity (MVR) of the molding composition, measured to EN ISO 1133:2005, is from 40 to 70 cm³/10 min, measured for 365°C/5 kg.

5. The use of a molding composition for producing a feed container according to at least one of claims 1 to 4 where the haze value of a test specimen made of the molding composition is from 2.0 to 4.5, measured to DIN 53236.

6. The use of a molding composition for producing a feed container according to at least one of claims 1 to 5 where the transparency of a test specimen made of the molding composition is from 70% to 99%, measured to DIN 53236.

7. A feed bottle made of a molding composition according to any of claims 1 to 6.

## Revendications

1. Utilisation d'un matériau de moulage pour la fabrication d'un contenant d'alimentation essentiellement constitué d'un copolymère, constitué par :
(A) de 5 à 60 % en poids d'unités de formule (I) 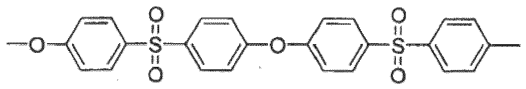 et
(B) de 40 à 95 % en poids d'unités de formule (II) 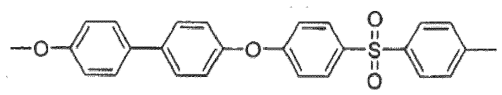
la somme des proportions en poids des unités A et B étant de 100 % en poids par rapport au copolymère et le copolymère présentant une force de déformation de 1 800 à 2 800 N, dans laquelle le contenant d'alimentation est un biberon.

2. Utilisation d'un matériau de moulage pour la fabrication d'un contenant d'alimentation selon la revendication 1, dans laquelle le copolymère est constitué de :
(A) de 5 à 50 % en poids d'unités de formule (I) et
(B) de 50 à 95 % en poids d'unités de formule (II),
la somme des proportions en poids des unités A et B étant de 100 % en poids par rapport au copolymère.

3. Utilisation d'un matériau de moulage pour la fabrication d'un contenant d'alimentation selon la revendication 1 ou 2, dans laquelle le copolymère est constitué de :
(A) de 8 à 35 % en poids d'unités de formule (I) et
(B) de 65 à 92 % en poids d'unités de formule (II),
la somme des proportions en poids des unités A et B étant de 100 % en poids par rapport au copolymère.

4. Utilisation d'un matériau de moulage pour la fabrication d'un contenant d'alimentation selon au moins l'une quelconque des revendications 1 à 3, dans laquelle le matériau de moulage présente une viscosité (MVR) mesurée selon EN ISO 1133:2005 de 40 à 70 cm³/10 minutes mesurée à 365 °C/5 kg.

5. Utilisation d'un matériau de moulage pour la fabrication d'un contenant d'alimentation selon au moins l'une quelconque des revendications 1 à 4, dans laquelle une éprouvette constituée du matériau de moulage présente une valeur de trouble de 2,0 à 4,5, mesurée selon DIN 53236.

6. Utilisation d'un matériau de moulage pour la fabrication d'un contenant d'alimentation selon au moins l'une quelconque des revendications 1 à 5, dans laquelle une éprouvette constituée du matériau de moulage présente une transparence de 70 % à 99 %, mesurée selon DIN 53236.

7. Biberon en un matériau de moulage selon l'une quelconque des revendications 1 à 6.
